# EUROPEAN PATENT SPECIFICATION

(11) **EP 4 523 107 B1**
(45) Date of publication and mention of the grant of the patent: **11.02.2026**
(21) Application number: 23727163.0
(22) Date of filing: 03.05.2023
(51) Int. Cl.: G06F 13/12, G06F 21/55, G06F 11/07, G06F 13/38, G06F 21/82, H04L 12/40, H04L 9/40, G06F 11/30

(54) **VERIFYING ENCRYPTION OF DATA TRAFFIC**
ÜBERPRÜFUNG DER VERSCHLÜSSELUNG VON DATENVERKEHR
VÉRIFICATION DE CHIFFREMENT DE TRAFIC DE DONNÉES

(30) Priority: 09.05.2022 US 202217662610
(43) Date of publication of application: 19.03.2025
(73) Proprietor: Amazon Technologies, Inc., Seattle, WA 98108-1226 (US)
(72) Inventor: BSHARA, Said, Seattle, Washington 98109-5210 (US); BSHARA, Nafea, Seattle, Washington 98109-5210 (US); SAIDI, Ali Ghassan, Seattle, Washington 98109-5210 (US)
(74) Representative: D Young & Co LLP
(86) International application number: PCT/US2023/020851
(87) International publication number: WO 2023/219852

(56) References cited:
- US-A1- 2013 219 452
- US-A1- 2020 320 214
- CASINO FRAN ET AL: "HEDGE: Efficient Traffic Classification of Encrypted and Compressed Packets", IEEE TRANSACTIONS ON INFORMATION FORENSICS AND SECURITY, IEEE, USA, vol. 14, no. 11, 1 November 2019 (2019-11-01), pages 2916 - 2926, XP011731942, ISSN: 1556-6013, [retrieved on 20190626], DOI: 10.1109/TIFS.2019.2911156

## Description

### BACKGROUND

Some computer systems handle confidential or sensitive data, which is transferred among the internal components of a chip, or among different chips. Generally, the data that is being transferred via an external interface is encrypted for security purposes to protect the data from attacks. The device receiving the encrypted data can decrypt the encrypted data to recover the original data.

US 2013/219452 A1 describes bus monitor for enhancing soc system security and realization method thereof.

A paper by Casino, F., et.al., published in IEEE Transactions On Information Forensics And Security, vol. 14, no. 11, 1 November 2019 (2019-11-01), pages 2916-2926, DOI: 10.1109/TIFS.2019.2911156 describes a method named HEDGE: Efficient Traffic Classification of Encrypted and Compressed Packets.

US 2020/320214 A1 describes randomness detection in network data.

### BRIEF DESCRIPTION OF THE DRAWINGS

Various embodiments in accordance with the present disclosure will be described with reference to the drawings, in which:
FIG. 1 illustrates a computing system comprising a data guard circuit configured to verify encryption of data traffic on a bus between a first integrated circuit (IC) and a second IC, according to some embodiments.
FIG. 2 illustrates a computing system comprising multiple data guard circuits configured to verify encryption of data traffic over different buses, according to some embodiments;
FIG. 3 illustrates example components of a data guard circuit in some embodiments;
FIG. 4 illustrates a flowchart for a method executed by an IC to verify encryption of the data traffic on a bus between two ICs, according to some embodiments; and
FIG. 5 illustrates an example of a computing device, according to certain aspects of the disclosure.

### DETAILED DESCRIPTION

A computer system may include one or more processors, memory devices, input/output (I/O) devices, accelerator devices, crypto engines, and other suitable components which may communicate with each other via one or more interconnects based on the functionality. In some cases, data handled by the computer system may be confidential or sensitive data, which is encrypted for security purposes. Generally, data traffic that is transferred out of a chip via external interfaces is encrypted. For example, the external interfaces may include a memory interface to an external memory (e.g., DRAM), a network interface to a network device (e.g., Ethernet controller), or a Peripheral Component Interconnect Express (PCIe) interface to an I/O device. The receiver of the encrypted data can decrypt the received data to recover the original data.

In some cases, due to a hardware or software bug or other error, the data that is transferred via external interfaces may inadvertently remain unencrypted. For example, a bit to enable the encryption and decryption of the data may not have been set due to some error, and, therefore, the data transferred on the external interfaces may be unencrypted. However, non-encryption of the data may not always be detected, especially if the data is not monitored. This scenario can expose the sensitive data and make it vulnerable to attacks. Thus, it is desirable to verify that the data traffic that is expected to be encrypted is in fact encrypted.

The techniques described herein can be used to verify whether the data traffic between different components and/or devices is encrypted as expected. In different embodiments, the data traffic is expected to have been encrypted using a single level of encryption or a double level of encryption. Therefore, the data prior to encryption (e.g., pre-encryption data) can be the data prior to a first level of encryption (e.g., unencrypted data), or the data prior to a second level of encryption (e.g., encrypted data after the first level of encryption). The data traffic can be on internal interfaces between components of a chip, or on external interfaces between two chips. In some embodiments, a data guard circuit can monitor the data traffic on a bus between two circuits/devices to analyze the data traffic based on a configuration. Analyzing the data traffic may include determining statistical information about the data from sampling the data traffic, which can be used to determine whether the data traffic is encrypted as expected. The data samples being taken can include payload data of packets, or certain windows of the data traffic. The statistical information can be determined by collecting statistical data from the data samples to identify data patterns which can be used to differentiate between the encrypted data and the unencrypted data. In some embodiments, the sampled data traffic can be compared with the pre-encryption data to determine whether the data traffic has been encrypted as expected.

As an example, in most cases, the payload for the encrypted data may include an approximately equal count of 1 bits and 0 bits, whereas the payload for the unencrypted data may include a much higher count of 0 bits than 1 bits, or vice-versa. In some embodiments, collecting the statistical data may include counting the number of 0 bits versus number of 1 bits in the sample and comparing with a threshold. If the ratio of 0 bits to 1 bits is more than the threshold then it may indicate that the data traffic is not encrypted. For example, if a sample includes payload data for 4 packets, and if each of the 4 packets includes a higher count of 0 bits (e.g., more than 60%) then it may indicate that the data traffic is not encrypted. In another example, if more than half of the packets in the sample include a higher count of 0 bits, then it may indicate that the data traffic is not encrypted. In some embodiments, collecting the statistical data may include counting the number of bytes with a predefined byte pattern and comparing the count with the threshold. For example, if the number of 0 bytes (bytes having all 0 bits) is more than the threshold then it may indicate that the data traffic is not encrypted.

In some embodiments, analyzing the data traffic may include identifying a predefined pattern in the data traffic which may indicate that the data is not encrypted. For example, in some implementations, a predefined pattern can be transferred as part of the data traffic when the encrypted data is not being transferred due to some error or a bug, or in a testing environment. In such cases, the data guard circuit can identify the predefined pattern and generate a notification so that appropriate actions can be taken to protect the unencrypted data, or the system can be shutdown.

In some embodiments, if the pre-encryption data is available, the data guard circuit can compare the pre-encryption data with the data that is being transferred on the bus. For example, the data guard circuit may receive the pre-encryption data. If the pre-encryption data is the same as the data being transmitted on the bus, this indicates that the data is not being encrypted as expected, and therefore, a notification can be generated accordingly. For example, in instances in which the data traffic is expected to have one level of encryption, the pre-encryption data can be unencrypted data, and a notification can be generated if the data traffic on the bus is the same as the unencrypted data. As another example, in instances in which the data traffic is expected to have two levels of encryption, the pre-encryption data can be data that has been encrypted using a first level of encryption, and a notification can be generated if the data traffic on the bus is the same as the first level encrypted data.

Thus, in various embodiments, one or more data guard circuits can be used to monitor different buses in a computer system, which can alert the software or a system administrator when the data traffic being transferred on any of the buses is not encrypted as expected. In such cases, the system may be shut down or certain functionality can be disabled to protect the sensitive data from further exposure.

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiments being described.

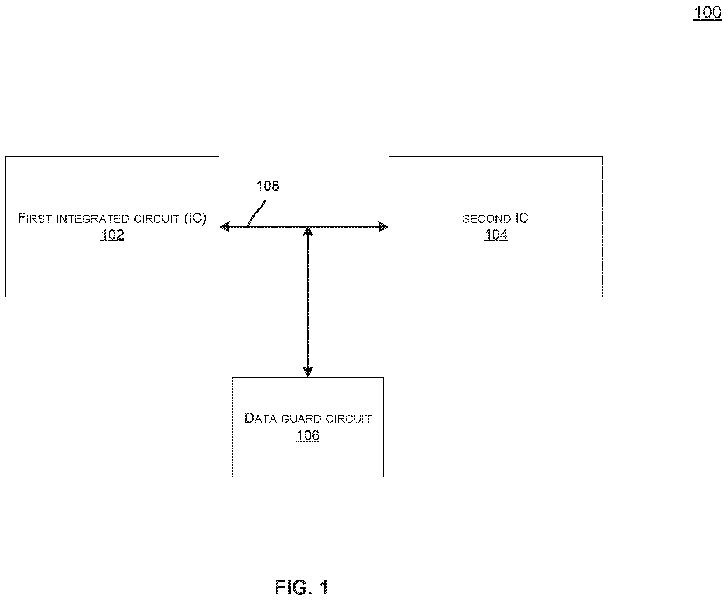

FIG. 1 illustrates a computing system 100 comprising a data guard circuit 106 configured to verify encryption of the data traffic on a bus 108 between a first integrated circuit (IC) 102 and a second IC 104, according to some embodiments.

In various implementations, the bus 108 can be part of one or more interconnects, fabrics, wires, signal traces, or other suitable communication channel which can be used to exchange data between the first IC 102 and the second IC 104. For example, in some implementations, the computing system 100 can be part of a system-on-a-chip (SoC), and the bus 108 can be an internal bus used by the first IC 102 and the second IC 104 to exchange data. In other implementations, the first IC 102 and the second IC 104 can be part of different IC devices or SoCs, and the bus 108 can be an external bus used by the first IC 102 and the second IC 104 to exchange data. The data guard circuit 106 can be part of the first IC 102, the second IC 104, or an independent device. In some implementations, the data guard circuit 106 can be part of an integrated circuit device that includes both the first IC 102 and the second IC 104.

In some instances, the data exchanged between the first IC 102 and the second IC 104 may include sensitive or confidential data, which is expected to be encrypted for security purposes. The first IC 102 may be configured to transmit encrypted data to the second IC 104 over the bus 108. In some implementations, the data may be encrypted by the first IC 102 using any suitable encryption algorithm (e.g., RSA, AES, DES, etc.) if the encryption is enabled (e.g., an encryption enable bit is set). In some implementations, the first IC 102 may receive the data which has already been encrypted by another device (e.g., an encryption engine) and the first IC 102 may not have access to the data prior to the encryption (e.g., unencrypted data). In some implementations, the first IC may receive pre-encryption data that has been encrypted previously using a first level of encryption, and the first IC may perform a second level of encryption to further encrypt the encrypted data for security purposes. The second IC 104 may be configured to decrypt the data received from the first IC 102 to recover the original data if the encryption was enabled.

In some instances, the data transmitted by the first IC 102 over the bus 108 may not be encrypted due to a hardware or software bug, or an error, such as a configuration error. For example, the encryption may not have been enabled or the encryption enable bit may not have been set due to the bug or the error, which can cause the data being exchanged on the bus 108 to be not encrypted as expected. For example, in some cases, the data may be expected to be encrypted using two levels of encryption; however, the second level of encryption may not be performed due to the bug or the error, and the data transmitted by the first IC may only include the first level of encryption. In this scenario, the data may be unprotected and, therefore, vulnerable to attacks.

Some embodiments can utilize the data guard circuit 106 to determine whether the data traffic on the bus 108 is encrypted as expected, and protect the data traffic for any further exposure. In some embodiments, the data guard circuit 106 can monitor the data traffic on the bus 108, and analyze the data traffic to determine statistical information about the data from sampling the monitored data traffic. For example, the sample of the monitored data traffic may include payload data being transferred on the bus 108 as part of the data traffic. The data guard circuit 106 may collect statistical data from the sample to identify data patterns which can be used to differentiate between the encrypted data that has been encrypted using the first level of encryption and the unencrypted data. The analysis can be performed based on the configuration information received by the data guard circuit 106. The configuration information may include data format information, a data pattern configuration, and a threshold value.

In various examples, the data traffic on the bus 108 may include the payload data and/or the control data based on the functionality supported by the first IC 102 and the second IC 104. The control data may include headers or descriptors associated with the data traffic, and is generally not encrypted. In some embodiments, the data format information included in the configuration information can indicate whether the data traffic includes the payload data and/or the control data, and the size of the payload data. For example, the payload data may correspond to a packet or a chunk of data (e.g., fixed number of bytes) in the data traffic. The data format information may include information to identify a start-of-packet and/or an end-of-packet, the location of header/control data, and a location of the length of the packet if provided in the header/control data. The data format information may also include an indication of whether the data traffic is expected to have a single level or a double level of encryption.

In some embodiments, the statistical data pattern can be identified in the payload data based on the data pattern configuration included in the configuration information. The data pattern configuration may indicate a size of the sample, and a type of the data pattern to identify in the sample. For example, the sample may correspond to one or more packets or chunks of the payload data. The type of the data pattern may indicate whether to identify number of 0 bits, number of 1 bits, a ratio of number of 0 bits to 1 bits, a ratio of number of 1 bits to 0 bits, number of bytes with a predefined byte pattern (e.g., all 0 bits or all 1 bits), or another data pattern (e.g., certain byte value), in each chunk of the sample. Thus, based on the data pattern configuration, the data guard circuit 106 may count number of bytes with the predefined byte pattern, number of 0 bits and/or numbers of 1 bits in each chunk of the sampled data traffic. The data guard circuit 106 may further compare the counted value with the threshold value received in the configuration information to determine whether the data traffic is encrypted with the single level of encryption as expected. For example, if the number of 0 bits is more than 50% in each chunk, or if the total number of 0 bits in the sample is more than 40%, then the data guard circuit 106 may conclude that the data traffic is not encrypted.

In some embodiments, the configuration information may also include a predefined data pattern which can be compared with the sampled data traffic to determine if the sampled data traffic is encrypted. If the data guard circuit 106 detects the predefined pattern on the bus 108, it may indicate that the sampled data traffic is not encrypted. In some embodiments, the predefined data pattern can be used for testing purposes. For example, in a certain configuration, the system (e.g., software and/or hardware) can generate a predefined data pattern to be transmitted on the bus 108 to indicate that the data traffic is not encrypted. In some implementations, the software executing on the first IC 102 may disable the encryption/decryption bit for a certain configuration (e.g., test mode), which can cause the first IC 102 to transmit the predefined data pattern. In some implementations, the first IC 102 may transmit the predefined data pattern when encrypted data cannot be transmitted due to an error, or is not available.

In some embodiments, the data guard circuit 106 may have access to the pre-encryption data associated with the sampled data traffic. In such cases, the data guard circuit 106 may compare the pre-encryption data with the sampled data traffic and if there is a match based on whether the single level or double level of encryption is expected, it may indicate that the sampled data traffic has not been encrypted as expected. Alternatively, if the pre-encryption data does not match with the sampled data traffic, there is a high probability that the sampled data traffic is encrypted as expected. In some embodiments, the data guard circuit 106 may still perform the analysis to identify the statistical data pattern in the sampled data traffic if the pre-encryption data does not match with the sampled data traffic to ensure that the sampled data traffic is encrypted as expected.

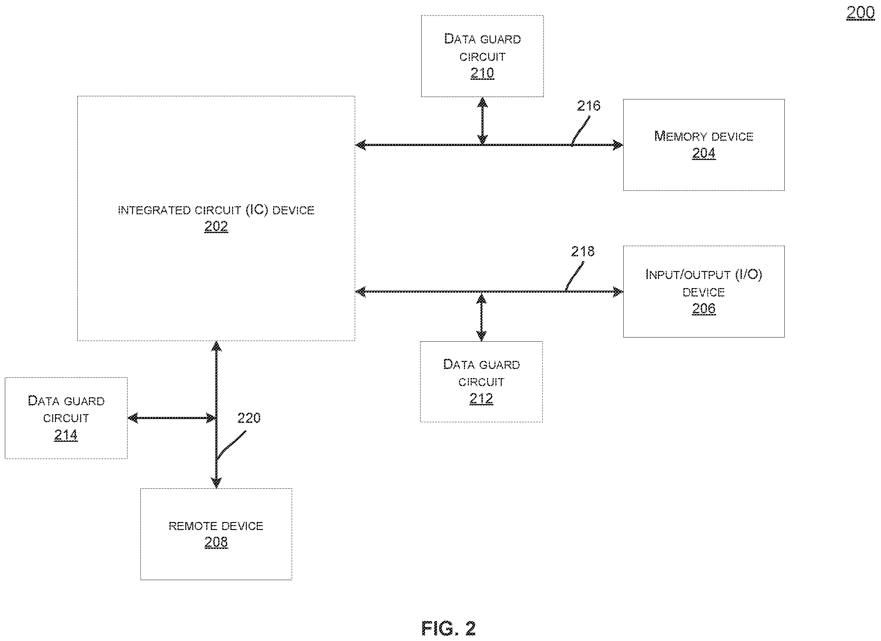

FIG. 2 illustrates a computing system 200 comprising multiple data guard circuits configured to verify encryption of the data traffic over different buses, according to some embodiments. In various examples, the computing system 200 may support functionalities for applications such as artificial intelligence (AI), Internet-of- Things (IoT), web hosting, networking, cloud computing, or high-performance computing, among others.

The computing system 200 may comprise an IC device 202 coupled to a memory device 204 via a bus 216, an I/O device 206 via a bus 218, and a remote device 208 via a bus 220. The IC device 202 may include an SoC or a multi-chip module (MCM), and may comprise one or more processors, controllers, internal memory, various interfaces (e.g., a network interface, an I/O interface, a memory interface), and other suitable components to support the intended functionalities. In various implementations, the buses 216, 218, and/or 220 can be coupled to one or more interconnects, fabrics, bridges, hubs, or switches. As an example, the memory device 204 can be a persistent or a non-persistent memory such as a DRAM, SSD, or a storage class memory, which may be coupled to the IC device 202 via the memory interface. The I/O device 206 can be a PCIe device, which may be configured to provide a PCIe connection to the IC device 202 via the I/O interface (e.g., PCIe interface). The remote device 208 can be a communication device which may be configured to communicate with the network interface of the IC device 202 over a network (e.g., Ethernet) connection.

In some embodiments, a separate data guard circuit can be used to monitor the data traffic on each bus coupled to the IC device 202 to determine whether the data traffic on that bus is encrypted as expected. For example, a data guard circuit 210 can be configured to monitor the data traffic on the bus 216 to verify whether the data exchanged between the IC device 202 and the memory device 204 is encrypted as expected. A data guard circuit 212 can be configured to monitor the data traffic on the bus 218 to verify whether the data exchanged between the IC device 202 and the I/O device 206 is encrypted as expected. A data guard circuit 214 can be configured to monitor the data traffic on the bus 220 to verify whether the data exchanged between the IC device 202 and the remote device 208 is encrypted as expected. Each of the data guard circuits 210, 212, and 214 can be an example of the data guard circuit 106 in FIG. 1. Each of the data guard circuits 210, 212, and 214 can be configured with relevant configuration information to identify different statistical data patterns in the corresponding data traffic. In some embodiments, functionality of the data guard circuits 210, 212, and 214 can be integrated into one IC device, which can monitor all the buses coupled to the IC device 202.

In some embodiments, one or more of the data guard circuits 210, 212, and 214 can be part of the IC device 202. As an example, the data guard circuit 214 can be part of the IC device 202, and may be configured to monitor the data traffic (e.g., network packets) on an internal bus between a controller circuit and a bus interface circuit such as a physical layer (PHY) device or a Media Access Control (MAC) device in the IC device 202, just before the network packets are transmitted to the remote device 208 via the bus 220. In another example, the data guard circuit 210 can be part of the IC device 202, and may be configured to monitor the data traffic (e.g., memory write or read data) on an internal bus between a processor circuit and a memory interface circuit in the IC device 202.

The IC device 202 may be coupled to different devices via one or more interconnects such as Advanced Microcontroller Bus Architecture (AMBA) Advanced eXtensible Interface (AXI), AXI Coherency Extensions (ACE), Coherent Hub Interface (CHI), Advanced Peripheral Bus (APB), Advanced High-performance Bus (AHB), Compute Express Link (CXL), or a proprietary bus based on the implementation. The techniques described herein can support verifying whether the data exchanged between different devices via one or more interconnects is encrypted irrespective of the type of the protocols supported by the interconnects or the devices.

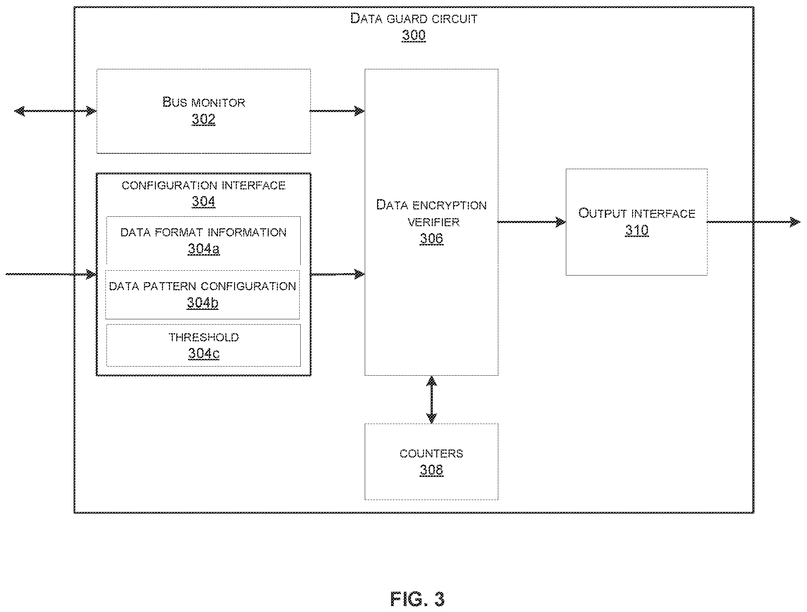

FIG. 3 illustrates example components of a data guard circuit 300 in some embodiments. The data guard circuit 300 can be an example of the data guard circuits 106, 210, 212, or 214 described with reference to FIGs. 1-2. The data guard circuit 300 may include a bus monitor 302, a configuration interface 304, a data encryption verifier 306, counters 308, and an output interface 310.

The bus monitor 302 may be configured to monitor data traffic on a bus between two ICs. For example, the bus monitor 302 may be configured to monitor the data traffic on the bus 108 between the first IC 102 and the second IC 104. In some examples, monitoring the data traffic on the bus 108 may include intercepting the data being transferred on the bus 108, which may include the payload data and/or the control data. The control data may include headers, descriptors, address, read/write indication, an indication for start of a frame or end of the frame, or other information associated with the data transfer. In some embodiments, the bus monitor 302 may sample the data traffic based on the configuration information associated with the data traffic. For example, the sampled data traffic may include one or more packets, or one or more chunks of the payload data.

The configuration interface 304 may be configured to receive the configuration information associated with the data traffic. The configuration information may include data format information 304a, a data pattern configuration 304b, and a threshold 304c. In some embodiments, the data format information 304a may indicate whether the data traffic includes the payload data and/or the control data, the size of the payload data, the format of the data traffic being transmitted (e.g., information to identify the location of the header/control data), and/or an indication of whether the data traffic is expected to have a single level or a double level of encryption. For example, the payload data may correspond to a packet or a chunk of data (e.g., fixed number of bytes) in the data traffic. In some examples, the size of the payload data may be the same as the width of the bus (e.g., memory bus). The data pattern configuration 304b may indicate a size of the sample, and a type of the data pattern to identify in the sample. The threshold 304c can be used to compare against the statistical data pattern identified in the sampled data traffic to verify the encryption of the data traffic. The configuration interface 304 may be implemented using registers which can be configured by the system software.

The data encryption verifier 306 may be configured to analyze the data traffic based on the configuration information. The analysis of the data traffic can be performed by sampling the data traffic. For example, sampling may be performed by the bus monitor 302 to determine the payload data based on the data format information 304a. Analysis of the data traffic may include collecting statistical data from the sample to identify a statistical data pattern in the sampled data traffic. The statistical data pattern can be identified in the sampled data traffic based on the data pattern configuration 304b. For example, the data pattern configuration 304b may indicate counting 0 bits or 1 bits in each chunk of the sample, calculating a ratio of the number of 0 bits to the number of 1 bits in each chunk of the sample, calculating a ratio of the number of 1 bits to the number of 0 bits in each chunk of the sample, counting number of bytes with a predefined byte pattern (e.g., all 0 bits or all 1 bits), or calculating a total number of 0 bits or 1 bits in the sample. The data encryption verifier 306 may manage one or more counters 308 to track the number of 0 bits, 1 bits, bytes with the predefined byte pattern, or another data pattern in the sampled data traffic. For example, a counter can be used to count number of 0 bits or 1 bits in each byte, and another counter can be used to count number of bytes having all 0 bits, all 1 bits, or another predefined data pattern.

The data encryption verifier 306 may be further configured to determine whether the data traffic is encrypted as expected based on the analysis. For example, the data encryption verifier 306 may include comparator logic to compare the counts indicated by the one or more counters 308 with the threshold 304c. The data encryption verifier 306 may determine whether the data traffic is encrypted as expected based on the comparison. For example, if the count for the number of 0 bits for each chunk in the sample is greater than the threshold 304c, it may indicate that the data traffic is not encrypted. In another example, if a ratio of the number of 0 bits to the number of 1 bits in the sample is less than the threshold 304c, it may indicate that the data traffic is encrypted. In another example, the data encryption verifier 306 may determine whether the data traffic is encrypted as expected by comparing the pre-encryption data with the sampled data traffic based on whether the single level or double level of encryption is expected.

The output interface 310 may be configured to generate a notification in response to determining that the data traffic is not encrypted as expected. Generating the notification may include sending an interrupt, a message, or an alert, which can be used by the system software or a system administrator to halt the data transfer on the bus, shut down the system, or disable certain functionalities, so that further exposure of the data that is not encrypted as expected can be minimized.

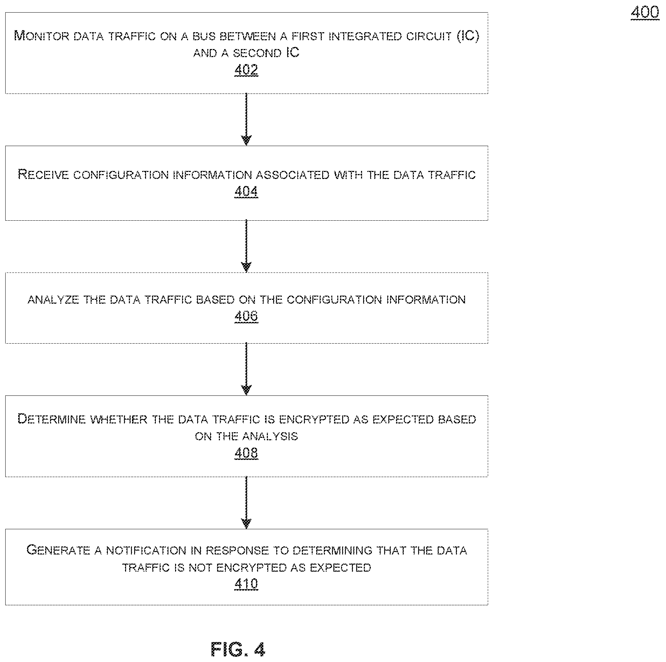

FIG. 4 illustrates a flowchart 400 for a method executed by an IC to verify encryption of the data traffic on a bus between two ICs, according to some embodiments. The method can be executed by any of the data guard circuits described with reference to FIGs. 1-3. For example, the method can be executed by the data guard circuit 210 to verify encryption of the data traffic on the bus 216 between the IC device 202 and the memory device 204 in FIG. 2.

In step 402, the method may include monitoring data traffic on a bus between a first IC and a second IC. Referring back to FIG. 2, the bus monitor 302 of the data guard circuit 210 may monitor the data traffic on the bus 216. As an example, the IC device 202 can be an SoC comprising a processor, and the memory device 204 can be a DRAM. The bus 216 can be part of an interconnect fabric such as those based on the AMBA AXI/CHI protocol. The processor may perform a write transaction to the memory device 204, thus the data traffic on the bus 216 may include the payload data to be written into the memory device 204.

In step 404, the method may include receiving configuration information associated with the data traffic. The data guard circuit 210 may receive configuration information via the configuration interface 304. For example, the configuration information may be programmed by the software executing on the SoC or the system software to configure the data format information 304a, the data pattern configuration 304b, and the threshold 304c registers with the appropriate values.

In step 406, the method may include analyzing the data traffic based on the configuration information. The data encryption verifier 306 may analyze the data traffic based on the data format information 304a and the data pattern configuration 304b. The configuration information may indicate that the data traffic is expected to have a single level of encryption, and therefore the pre-encryption data may include unencrypted data. The analysis of the data traffic may include identifying a statistical data pattern in the sampled data traffic by the data encryption verifier 306. As an example, the data format information 304a may indicate that the data traffic includes only payload data without any control data. Furthermore, the data pattern configuration 304b may indicate a sample size of 4 chunks (e.g., four cycles of write data), and counting 0 bits in each chunk to determine the statistical data pattern. Thus, the data encryption verifier 306 may increment the one or more counters 308 to count the number of 0 bits in each chunk of the 4 chunks in the sample as the data is transferred on the bus 216.

In step 408, the method may include determining whether the data traffic is encrypted as expected based on the analysis. The data encryption verifier 306 may compare the count of the number of 0 bits with the threshold 304c to determine whether the data traffic is encrypted with the single level of encryption as expected. In various examples, separate counts for each chunk in the sample or a total count for the sample can be compared with the threshold 304c. In one example, if the count of 0 bits in each chunk of the sample is more than the threshold 304c, then the data encryption verifier 306 may conclude that the data traffic is not encrypted. In another example, if the count of 0 bits in only one of the 4 chunks is more than the threshold 304c, then the data encryption verifier 306 may conclude that the data traffic is encrypted.

In step 410, the method may include generating a notification in response to determining that the data traffic is not encrypted as expected. The output interface 310 may generate a notification in response to the data encryption verifier 306 determining that the data traffic is not encrypted as expected. In some cases, the processor may halt writing to the memory device 204 based upon the notification in order to protect the data from any attacks. In other cases, the system may be shutdown, or certain functionality can be disabled to protect the sensitive data.

Thus, one or more instances of the data guard circuit described with reference to the previous figures can be used to protect the data being transferred on different buses in a computing system. The buses can be internal buses within a chip, or external buses between multiple chips.

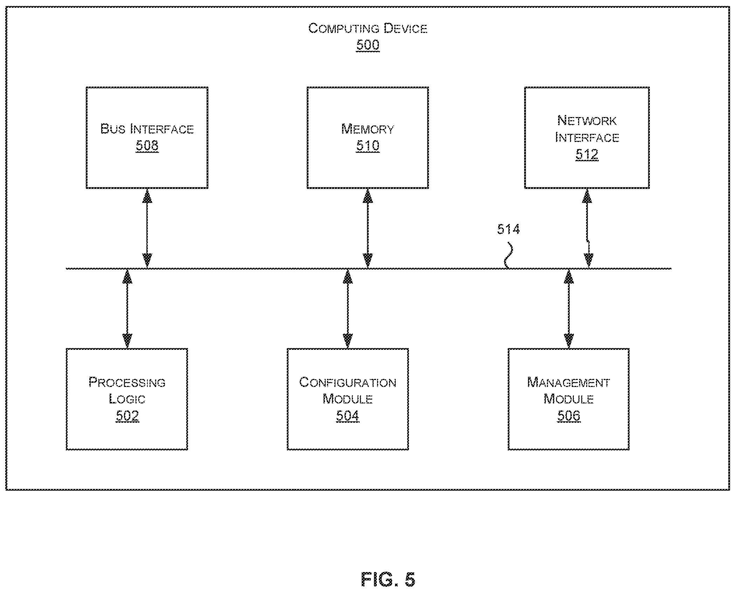

FIG. 5 illustrates an example of a computing device 500. Functionality and/or several components of the computing device 500 may be used without limitation with other embodiments disclosed elsewhere in this disclosure, without limitations. The computing device 500 can be an example of the first IC 102, the second IC 104, or the IC device 202. A computing device 500 may facilitate processing of packets and/or forwarding of packets from the computing device 500 to another device. As referred to herein, a "packet" or "network packet" may refer to a variable or fixed unit of data. In some instances, a packet may include a packet header and a packet payload. The packet header may include information associated with the packet, such as the source, destination, quality of service parameters, length, protocol, routing labels, error correction information, etc. In certain implementations, one packet header may indicate information associated with a series of packets, such as a burst transaction. In some implementations, the computing device 500 may be the recipient and/or generator of packets. In some implementations, the computing device 500 may modify the contents of the packet before forwarding the packet to another device. The computing device 500 may be a peripheral device coupled to another computer device, a switch, a router or any other suitable device enabled for receiving and forwarding packets.

In one example, the computing device 500 may include processing logic 502, a configuration module 504, a management module 506, a bus interface module 508, memory 510, and a network interface module 512. These modules may be hardware modules, software modules, or a combination of hardware and software. In certain instances, modules may be interchangeably used with components or engines, without deviating from the scope of the disclosure. The computing device 500 may include additional modules, which are not illustrated here. In some implementations, the computing device 500 may include fewer modules. In some implementations, one or more of the modules may be combined into one module. One or more of the modules may be in communication with each other over a communication channel 514. The communication channel 514 may include one or more busses, meshes, matrices, fabrics, a combination of these communication channels, or some other suitable communication channel.

The processing logic 502 may include application specific integrated circuits (ASICs), field programmable gate arrays (FPGAs), systems-on-chip (SoCs), network processing units (NPUs), processors configured to execute instructions or any other circuitry configured to perform logical arithmetic and floating point operations. Examples of processors that may be included in the processing logic 502 may include processors developed by ARM^{®}, MIPS^{®}, AMD^{®}, Intel^{®}, Qualcomm^{®}, and the like. In certain implementations, processors may include multiple processing cores, wherein each processing core may be configured to execute instructions independently of the other processing cores. Furthermore, in certain implementations, each processor or processing core may implement multiple processing threads executing instructions on the same processor or processing core, while maintaining logical separation between the multiple processing threads. Such processing threads executing on the processor or processing core may be exposed to software as separate logical processors or processing cores. In some implementations, multiple processors, processing cores or processing threads executing on the same core may share certain resources, such as for example busses, level 1 (L1) caches, and/or level 2 (L2) caches. The instructions executed by the processing logic 502 may be stored on a computer-readable storage medium, for example, in the form of a computer program. The computer-readable storage medium may be non-transitory. In some cases, the computer-readable medium may be part of the memory 510.

The memory 510 may include either volatile or non-volatile, or both volatile and non-volatile types of memory. The memory 510 may, for example, include random access memory (RAM), read only memory (ROM), Electrically Erasable Programmable Read-Only Memory (EEPROM), flash memory, and/or some other suitable storage media. In some cases, some or all of the memory 510 may be internal to the computing device 500, while in other cases some or all of the memory may be external to the computing device 500. The memory 510 may store an operating system comprising executable instructions that, when executed by the processing logic 502, provides the execution environment for executing instructions providing networking functionality for the computing device 500. The memory may also store and maintain several data structures and routing tables for facilitating the functionality of the computing device 500.

In some implementations, the configuration module 504 may include one or more configuration registers. Configuration registers may control the operations of the computing device 500. In some implementations, one or more bits in the configuration register can represent certain capabilities of the computing device 500. Configuration registers may be programmed by instructions executing in the processing logic 502, and/or by an external entity, such as a host device, an operating system executing on a host device, and/or a remote device. The configuration module 504 may further include hardware and/or software that control the operations of the computing device 500.

In some implementations, the management module 506 may be configured to manage different components of the computing device 500. In some cases, the management module 506 may configure one or more bits in one or more configuration registers at power up, to enable or disable certain capabilities of the computing device 500. In certain implementations, the management module 506 may use processing resources from the processing logic 502. In other implementations, the management module 506 may have processing logic similar to the processing logic 502, but segmented away or implemented on a different power plane than the processing logic 502.

The bus interface module 508 may enable communication with external entities, such as a host device and/or other components in a computing system, over an external communication medium. The bus interface module 508 may include a physical interface for connecting to a cable, socket, port, or other connection to the external communication medium. The bus interface module 508 may further include hardware and/or software to manage incoming and outgoing transactions. The bus interface module 508 may implement a local bus protocol, such as Peripheral Component Interconnect (PCI) based protocols, Non-Volatile Memory Express (NVMe), Advanced Host Controller Interface (AHCI), Small Computer System Interface (SCSI), Serial Attached SCSI (SAS), Serial AT Attachment (SATA), Parallel ATA (PATA), some other standard bus protocol, or a proprietary bus protocol. The bus interface module 508 may include the physical layer for any of these bus protocols, including a connector, power management, and error handling, among other things. In some implementations, the computing device 500 may include multiple bus interface modules for communicating with multiple external entities. These multiple bus interface modules may implement the same local bus protocol, different local bus protocols, or a combination of the same and different bus protocols.

The network interface module 512 may include hardware and/or software for communicating with a network. This network interface module 512 may, for example, include physical connectors or physical ports for wired connection to a network, and/or antennas for wireless communication to a network. The network interface module 512 may further include hardware and/or software configured to implement a network protocol stack. The network interface module 512 may communicate with the network using a network protocol, such as for example TCP/IP, Infiniband, RoCE, Institute of Electrical and Electronics Engineers (IEEE) 802.11 wireless protocols, User Datagram Protocol (UDP), Asynchronous Transfer Mode (ATM), token ring, frame relay, High Level Data Link Control (HDLC), Fiber Distributed Data Interface (FDDI), and/or Point-to-Point Protocol (PPP), among others. In some implementations, the computing device 500 may include multiple network interface modules, each configured to communicate with a different network. For example, in these implementations, the computing device 500 may include a network interface module for communicating with a wired Ethernet network, a wireless 802.11 network, a cellular network, an Infiniband network, etc.

The various components and modules of the computing device 500, described above, may be implemented as discrete components, as a System on a Chip (SoC), as an ASIC, as an NPU, as an FPGA, or any combination thereof. In some embodiments, the SoC or other component may be communicatively coupled to another computing system to provide various services such as traffic monitoring, traffic shaping, computing, etc. In some embodiments of the technology, the SoC or other component may include multiple subsystems.

The modules described herein may be software modules, hardware modules or a suitable combination thereof. If the modules are software modules, the modules can be embodied on a non-transitory computer readable medium and processed by a processor in any of the computer systems described herein. It should be noted that the described processes and architectures can be performed either in real-time or in an asynchronous mode prior to any user interaction. The modules may be configured in the manner suggested in FIG. 5, and/or functions described herein can be provided by one or more modules that exist as separate modules and/or module functions described herein can be spread over multiple modules.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

While the disclosed techniques are susceptible to various modifications and alternative constructions, certain illustrated embodiments thereof are shown in the drawings and have been described above in detail. It should be understood, however, that there is no intention to limit the disclosure to the specific form or forms disclosed.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Various embodiments of this disclosure are described herein, including the best mode known to the inventors for carrying out the disclosure. Variations of those embodiments may become apparent to those of ordinary skill in the art upon reading the foregoing description. The inventors expect skilled artisans to employ such variations as appropriate and the inventors intend for the disclosure to be practiced otherwise than as specifically described herein. The invention is defined by the appended claims.

## Claims

1. An integrated circuit, IC, device, comprising:
a bus monitor configured to monitor data traffic on a bus between a first IC and a second IC;
a configuration interface configured to receive configuration information associated with the data traffic;
a data encryption verifier configured to:
analyze the data traffic based on the configuration information, wherein the analysis of the data traffic is performed by sampling the data traffic, and wherein the analysis of the data traffic includes identifying a statistical data pattern in the sampled data traffic; and
determine whether the data traffic is encrypted as expected based on the analysis; and
an output interface configured to generate a notification in response to determining that the data traffic is not encrypted as expected.

2. The IC device of claim 1, wherein the configuration information is used to identify payload data in the sampled data traffic based on data format information included in the configuration information.

3. The IC device of any one of claims 1 or 2, wherein identifying the statistical data pattern in the sampled data traffic is performed based on a data pattern configuration included in the configuration information.

4. The IC device of any one of claims 1 or 2, wherein identifying the statistical data pattern in the sampled data traffic includes counting a number of bytes having a predefined byte pattern in the sampled data traffic, and wherein determining whether the data traffic is encrypted as expected is based on a comparison of the count of the number of bytes having the predefined byte pattern with a threshold.

5. The IC device of claim 4, wherein the predefined byte pattern is a byte having all zeros.

6. The IC device of claim 1, wherein identifying the statistical data pattern in the sampled data traffic includes determining a ratio of 0 bits to 1 bits in the sampled data traffic, and wherein determining whether the data traffic is encrypted as expected is based on a comparison of the ratio with a threshold.

7. The IC device of claim 1, wherein the configuration information includes a predefined data pattern, and wherein determining whether the data traffic is encrypted as expected is based on a comparison of the sampled data traffic with the predefined data pattern.

8. The IC device of claim 1, wherein the data encryption verifier is further configured to:
receive pre-encryption data associated with the sampled data traffic,
wherein determining whether the sampled data traffic is encrypted as expected is based on a comparison of the pre-encryption data with the sampled data traffic.

9. The IC device of claim 8, wherein the data traffic is expected to have two levels of encryption applied, and wherein the pre-encryption data being compared with the sampled data traffic is encrypted data having one level of encryption.

10. The IC device of claim 8, wherein the data traffic is expected to have one level of encryption applied, and wherein the pre-encryption data being compared with the sampled data traffic is unencrypted data.

11. The IC device of any one of claims 1 to 10, wherein the data traffic on the bus is halted based upon the notification that the data traffic is not encrypted as expected.

12. The IC device of any one of claims 1 to 11, wherein the bus is an external bus of the first IC, or an internal bus of a system-on-a-chip, SoC, that includes the first IC and the IC device.

13. A method executed by an integrated circuit, IC, device comprising a bus monitor, the method comprising:
monitoring data traffic on a bus between a first IC and a second IC;
receiving configuration information associated with the data traffic;
analyzing the data traffic based on the configuration information, wherein analyzing the data traffic includes one of:
identifying a statistical data pattern in the data traffic, and comparing the statistical data pattern to a threshold;
comparing the data traffic with pre-encryption data associated with the data traffic; or
comparing the data traffic with a predefined data pattern;
determining whether the data traffic is encrypted as expected based on the analysis; and
generating a notification in response to determining that the data traffic is not encrypted as expected.

## Patentansprüche

1. Integrierte Schaltungs (Integrated Circuit, IC) - Vorrichtung, umfassend:
einen Busmonitor, der dazu konfiguriert ist, den Datenverkehr auf einem Bus zwischen einer ersten IC und einer zweiten IC zu überwachen;
eine Konfigurationsschnittstelle, die dazu konfiguriert ist, mit dem Datenverkehr verbundene Konfigurationsinformationen zu empfangen;
einen Datenverschlüsselungs-Verifizierer, der konfiguriert ist zum:
Analysieren des Datenverkehrs basierend auf den Konfigurationsinformationen, wobei das Analysieren des Datenverkehrs durch Abtasten des Datenverkehrs durchgeführt wird und wobei das Analysieren des Datenverkehrs das Identifizieren eines statistischen Datenmusters in dem abgetasteten Datenverkehr umfasst; und Bestimmen, ob der Datenverkehr wie erwartet verschlüsselt ist, basierend auf der Analyse; und
eine Ausgabeschnittstelle, die dazu konfiguriert ist, eine Benachrichtigung zu erzeugen, in Reaktion auf eine Bestimmung, dass der Datenverkehr nicht wie erwartet verschlüsselt ist.

2. IC-Vorrichtung nach Anspruch 1, wobei die Konfigurationsinformationen verwendet werden, um Nutzdaten in dem abgetasteten Datenverkehr zu identifizieren, basierend auf in den Konfigurationsinformationen enthaltenen Datenformatinformationen.

3. IC-Vorrichtung nach einem der Ansprüche 1 oder 2, wobei das Identifizieren des statistischen Datenmusters in dem abgetasteten Datenverkehr basierend auf einer in den Konfigurationsinformationen enthaltenen Datenmusterkonfiguration durchgeführt wird.

4. IC-Vorrichtung nach einem der Ansprüche 1 oder 2, wobei das Identifizieren des statistischen Datenmusters in dem abgetasteten Datenverkehr das Zählen einer Anzahl von Bytes mit einem vordefinierten Bytemuster in dem abgetasteten Datenverkehr umfasst, und wobei das Bestimmen, ob der Datenverkehr wie erwartet verschlüsselt ist, auf einem Vergleich des Zählwerts der Anzahl von Bytes mit dem vordefinierten Bytemuster mit einem Schwellenwert basiert.

5. IC-Vorrichtung nach Anspruch 4, wobei das vordefinierte Bytemuster ein Byte nur mit Nullen ist.

6. IC-Vorrichtung nach Anspruch 1, wobei das Identifizieren des statistischen Datenmusters in dem abgetasteten Datenverkehr das Bestimmen eines Verhältnisses von 0-Bits zu 1-Bits in dem abgetasteten Datenverkehr umfasst und wobei das Bestimmen, ob der Datenverkehr wie erwartet verschlüsselt ist, auf einem Vergleich des Verhältnisses mit einem Schwellenwert basiert.

7. IC-Vorrichtung nach Anspruch 1, wobei die Konfigurationsinformationen ein vordefiniertes Datenmuster enthalten und wobei das Bestimmen, ob der Datenverkehr wie erwartet verschlüsselt ist, auf einem Vergleich des abgetasteten Datenverkehrs mit dem vordefinierten Datenmuster basiert.

8. IC-Vorrichtung nach Anspruch 1, wobei der Datenverschlüsselungs-Verifizierer ferner konfiguriert ist zum:
Empfangen von Vorverschlüsselungsdaten, die mit dem abgetasteten Datenverkehr verbunden sind,
wobei das Bestimmen, ob der abgetastete Datenverkehr wie erwartet verschlüsselt ist, auf einem Vergleich der Vorverschlüsselungsdaten mit dem abgetasteten Datenverkehr beruht.

9. IC-Vorrichtung nach Anspruch 8, wobei erwartet wird, dass auf den Datenverkehr zwei Verschlüsselungsstufen angewandt wurden, und wobei die Vorverschlüsselungsdaten, die mit dem abgetasteten Datenverkehr verglichen werden, verschlüsselte Daten mit einer Verschlüsselungsstufe sind.

10. IC-Vorrichtung nach Anspruch 8, wobei erwartet wird, dass auf den Datenverkehr eine Verschlüsselungsstufe angewandt wurde, und wobei die Vorverschlüsselungsdaten, die mit dem abgetasteten Datenverkehr verglichen werden, unverschlüsselte Daten sind.

11. IC-Vorrichtung nach einem der Ansprüche 1 bis 10, wobei der Datenverkehr auf dem Bus angehalten wird, basierend auf der Benachrichtigung, dass der Datenverkehr nicht wie erwartet verschlüsselt ist.

12. IC-Vorrichtung nach einem der Ansprüche 1 bis 11, wobei der Bus ein externer Bus der ersten IC oder ein interner Bus eines Ein-Chip-Systems, SoC (System-on-a-Chip), ist, das die erste IC und die IC-Vorrichtung aufweist.

13. Verfahren, das durch eine integrierte Schaltung (IC) ausgeführt wird, die einen Busmonitor umfasst, wobei das Verfahren umfasst:
Überwachen des Datenverkehrs auf einem Bus zwischen einer ersten IC und einer zweiten IC;
Empfangen von Konfigurationsinformationen, die mit dem Datenverkehr verbunden sind;
Analysieren des Datenverkehrs basierend auf den Konfigurationsinformationen, wobei das Analysieren des Datenverkehrs eines der folgenden beinhaltet:
Identifizieren eines statistischen Datenmusters im Datenverkehr und Vergleichen des statistischen Datenmusters mit einem Schwellenwert;
Vergleichen des Datenverkehrs mit Vorverschlüsselungsdaten, die mit dem Datenverkehr verbunden sind; oder
Vergleichen des Datenverkehrs mit einem vordefinierten Datenmuster;
Bestimmen, ob der Datenverkehr wie erwartet verschlüsselt ist, basierend auf der Analyse; und
Erzeugen einer Benachrichtigung in Reaktion auf eine Bestimmung, dass der Datenverkehr nicht wie erwartet verschlüsselt ist.

## Revendications

1. Dispositif à circuit intégré, IC, comprenant :
un moniteur de bus configuré pour surveiller le trafic de données sur un bus entre un premier IC et un second IC ;
une interface de configuration configurée pour recevoir des informations de configuration associées au trafic de données ;
un vérificateur de chiffrement de données configuré pour :
analyser le trafic de données sur la base des informations de configuration, l'analyse du trafic de données étant effectué par échantillonnage du trafic de données, et l'analyse du trafic de données comprenant l'identification d'un motif de données statistiques dans le trafic de données échantillonné ; et déterminer si le trafic de données est chiffré comme prévu sur la base de l'analyse ; et
une interface de sortie configurée pour générer une notification en réponse à la détermination que le trafic de données n'est pas chiffré comme prévu.

2. Dispositif IC selon la revendication 1, dans lequel les informations de configuration sont utilisées pour identifier des données utiles dans le trafic de données échantillonné sur la base d'informations de format de données incluses dans les informations de configuration.

3. Dispositif IC selon l'une quelconque des revendications 1 ou 2, dans lequel l'identification du motif de données statistiques dans le trafic de données échantillonné est effectué sur la base d'une configuration de motif de données incluse dans les informations de configuration.

4. Dispositif IC selon l'une quelconque des revendications 1 ou 2, dans lequel l'identification du motif de données statistiques dans le trafic de données échantillonné comprend le comptage d'un nombre d'octets ayant un motif d'octet prédéfini dans le trafic de données échantillonné, et dans lequel la détermination de si le trafic de données est chiffré comme prévu est basée sur une comparaison du nombre d'octets ayant le motif d'octet prédéfini avec un seuil.

5. Dispositif IC selon la revendication 4, dans lequel le motif d'octet prédéfini est un octet out à zéro.

6. Dispositif IC selon la revendication 1, dans lequel l'identification du motif de données statistiques dans le trafic de données échantillonné comprend la détermination d'un rapport de 0 bit à 1 bit dans le trafic de données échantillonné, et dans lequel la détermination de si le trafic de données est chiffré comme prévu est basée sur une comparaison du rapport avec un seuil.

7. Dispositif IC selon la revendication 1, dans lequel les informations de configuration comprennent un motif de données prédéfini, et dans lequel la détermination de si le trafic de données est chiffré comme prévu est basée sur une comparaison du trafic de données échantillonné avec le motif de données prédéfini.

8. Dispositif IC selon la revendication 1, dans lequel le vérificateur de chiffrement de données est en outre configuré pour :
recevoir des données de pré-chiffrement associées au trafic de données échantillonné,
dans lequel la détermination de si le trafic de données est chiffré comme prévu est basée sur une comparaison des données de pré-chiffrement avec le trafic de données échantillonné.

9. Dispositif IC selon la revendication 8, dans lequel il est prévu que le trafic de données présente deux niveaux de chiffrement appliqués, et dans lequel les données de pré-chiffrement comparées au trafic de données échantillonné sont des données chiffrées présentant un niveau de chiffrement.

10. Dispositif IC selon la revendication 8, dans lequel il est prévu que le trafic de données présente un niveau de chiffrement appliqué, et dans lequel les données de pré-chiffrement comparées au trafic de données échantillonné sont des données non chiffrées.

11. Dispositif IC selon l'une quelconque des revendications 1 à 10, dans lequel le trafic de données sur le bus est arrêté sur la base de la notification que le trafic de données n'est pas chiffré comme prévu.

12. Dispositif IC selon l'une quelconque des revendications 1 à 11, dans lequel le bus est un bus externe du premier IC, ou un bus interne d'un système sur puce, SoC, qui comprend le premier IC et le dispositif IC.

13. Procédé exécuté par un dispositif à circuit intégré, IC, comprenant un moniteur de bus, le procédé comprenant :
la surveillance du trafic de données sur un bus entre un premier IC et un second IC ;
la réception d'informations de configuration associées au trafic de données ;
l'analyse du trafic de données sur la base des informations de configuration, dans lequel l'analyse du trafic de données comprend l'une des actions suivantes :
l'identification d'un motif de données statistiques dans le trafic de données, et la comparaison du motif de données statistiques à un seuil ;
la comparaison du trafic de données avec des données de pré-chiffrement associées au trafic de données ; ou
la comparaison du trafic de données avec un motif de données prédéfini ;
la détermination de si le trafic de données est chiffré comme prévu sur la base de l'analyse ; et
la génération d'une notification en réponse à la détermination que le trafic de données n'est pas chiffré comme prévu.
